# EUROPÄISCHE PATENTANMELDUNG

(11) **EP 2 690 125 A1**
(43) Veröffentlichungstag der Anmeldung: **29.01.2014**
(21) Anmeldenummer: 12178147.0
(22) Anmeldetag: 27.07.2012
(51) Int. Cl.: C08G 75/14, C08F 6/00

(54) **Verfahren zur Aufreinigung von Polyphenoldisulfiden**

(71) Anmelder: BASF SE, 67056 Ludwigshafen (DE)
(72) Erfinder: Die Erfindernennung liegt noch nicht vor
(74) Vertreter: Rippel, Hans Christoph

(57) **Zusammenfassung**

Die Erfindung betrifft ein Verfahren zur Aufreinigung von Polyphenoldisulfiden der Formel (I), 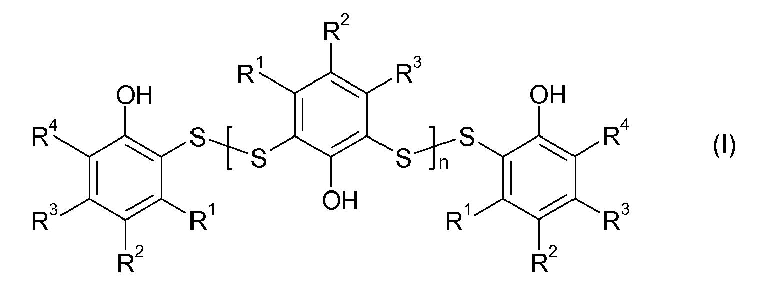 wobei die Symbole R¹, R², R³, R⁴ und n die in der Beschreibung angegebenen Bedeutungen haben,
umfassend den folgenden Schritt:
a₁) Destillation einer Mischung, enthaltend Polyphenoldisulfide der Formel (I) und Leichtsieder, unter Bildung eines Destillationsrückstands a₁ und eines Destillats a₁, dadurch gekennzeichnet, dass ein Kurzwegverdampfer verwendet wird und dass die Polyphenoldisulfide der Formel (I) im Destillationsrückstand a₁ und die Leichtsieder im Destillat a₁ angereichert werden.

## Beschreibung

Die Erfindung betrifft ein Verfahren zur Aufreinigung von Polyphenoldisulfiden. Weiter betrifft die Erfindung Polyphenoldisulfide, erhältlich durch das Verfahren, ein Flammschutzsystem, enthaltend die Polyphenoldisulfide und eine halogenfreie organische Phosphorverbindung, sowie eine Polymerzusammensetzung, enthaltend das Flammschutzsystem.

Die Ausrüstung von Polymeren, insbesondere Schaumstoffen, mit Flammschutzmitteln ist für eine Vielzahl von Anwendungen von Bedeutung, beispielsweise für Polystyrol-Partikelschaumstoffe aus expandierbarem Polystyrol (EPS) oder Polystyrol-Extrusionsschaumstoffplatten (XPS) zum Isolieren von Gebäuden.

Derzeit werden als Flammschutzmittel in Kunststoffen hauptsächlich polyhalogenierte Kohlenwasserstoffe, gegebenenfalls zusammen mit geeigneten Synergisten, eingesetzt. Ein typischer Vertreter dieser klassischen Flammschutzmittel ist Hexabromcyclododecan. Aufgrund von Bioakkumulation sowie Persistenz einiger polyhalogenierter Kohlenwasserstoffe ist es ein großes Bestreben in der Kunststoffindustrie, halogenhaltige Flammschutzmittel durch halogenfreie zu ersetzen.

Eine vielversprechende Alternative zu halogenhaltigen Systemen bieten halogenfreie phosphorhaltige Flammschutzmittel in Kombination mit halogenfreien schwefelhaltigen Synergisten.

Der Einsatz von Polyphenoldisulfiden als Synergisten zu halogenfreien phosphorhaltigen Flammschutzmitteln wird bereits in AT 508 304 und WO 2011/000019 sowie in der nicht vorveröffentlichten internationalen Patentanmeldung PCT/EP2011/073958 beschrieben.

Poly-(tert.-butylphenoldisulfid) und Poly-(tert.-pentylphenoldisulfid) sind wichtige Vertreter dieser Verbindungsklasse und können zum Beispiel als VULTAC® TB7 bzw. VULTAC® 2 und 3 kommerziell bezogen werden. Gemäß US 3,968,062 wird davon ausgegangen, dass es sich hierbei um komplexe Mischungen aus Polysulfiden handelt.

Nach US 3,968,062 wird Poly-(tert.-butylphenoldisulfid) durch Erhitzen von para-tert.-Butylphenol mit Schwefelmonochlorid unter Verwendung von Trichlorethylen als Lösungsmittel hergestellt, wobei die Temperatur des Heizmantels zwischen 115 und 155 °C liegt. Der Einsatz eines niedrig siedenden Lösungsmittels wie Trichlorethylen empfiehlt sich gemäß oben genannter US-Patentanmeldung, um sublimiertes para-tert.-Butylphenol in das Reaktionsgefäß zurückzuführen.

Obwohl die Polyphenoldisulfide des Standes der Technik effiziente Synergisten zu halogenfreien phosphorhaltigen Flammschutzmitteln darstellen, besteht noch Raum für Verbesserungen, insbesondere was deren Herstellung sowie deren anwendungstechnische Eigenschaften betrifft.

Ein Nachteil kommerziell erhältlicher Polysulfidmischungen ist deren unbefriedigende thermische Stabilität für die Einarbeitung in thermoplastische Polymere, z.B. Polystyrol, sowie der darin enthaltene Anteil an niedermolekularen, leichtflüchtigen Komponenten. Damit verbunden ist auch eine während ihrer Anwendung in Polymeren bei erhöhter Temperatur teilweise auftretende Geruchsentwicklung, z.B. bei der Extrusion oder beim Zuschnitt von Schaumstoffblöcken.

Die Aufgabe der Erfindung liegt in der Bereitstellung von Polyphenoldisulfiden, die einen geringen Anteil an niedermolekularen, leichtflüchtigen Komponenten zeigen und während deren Anwendung in Polymeren bei erhöhter Temperatur kein Geruch entsteht.

Es wurde nun gefunden, dass bei der Aufreinigung von Polyphenoldisulfiden durch Kurzwegdestillation kaum oder keine Zersetzungsprodukte entstehen und dass bei einem solchen Verfahren Polyphenoldisulfide mit hohen Reinheiten und sehr guten anwendungstechnischen Eigenschaften erhalten werden.

Gelöst wird die Aufgabe daher durch ein Verfahren zur Aufreinigung von Polyphenoldisulfiden der Formel (I) 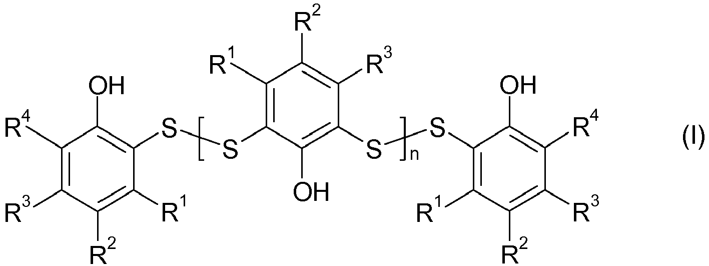 wobei die Symbole R¹, R², R³, R⁴ und n folgende Bedeutungen haben:
- R¹, R², R³: sind gleich oder verschieden C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl, eine Heteroarylgruppe, die ein oder mehrere Heteroatome aus der Gruppe N, O und S enthält, O-(C₁-C₁₈)-Alkyl, O-(C₂-C₁₈)-Alkenyl, O-(C₂-C₁₈)-Alkinyl, O-(C₆-C₁₂)-Aryl, O-(C₃-C₁₀)-Cycloalkyl, (C₆-C₁₂)-Aryl-(C₁-C₁₈)-Alkyl-O, S-(C₁-C₁₈)-Alkyl, S-(C₂-C₁₈)-Alkenyl, S-(C₂-C₁₈)-Alkinyl, S-(C₆-C₁₂)-Aryl, S-(C₃-C₁₀)-Cycloalkyl, (C₆-C₁₂)-Aryl-(C₁-C,₈)-Alkyl-S, OH, F, Cl, Br oder H;
- R⁴: ist gleich oder verschieden SH, C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl, eine Heteroarylgruppe, die ein oder mehrere Heteroatome aus der Gruppe N, O und S enthält, O-(C₁-C₁₈)-Alkyl, O-(C₂-C₁₈)-Alkenyl, O-(C₂-C₁₈)-Alkinyl, O-(C₆-C₁₂)-Aryl, O-(C₃-C₁₀)-Cycloalkyl, (C₆-C₁₂)-Aryl-(C₁-C₁₈)-Alkyl-O, S-(C₁-C₁₈)-Alkyl, S-(C₂-C₁₈)-Alkenyl, S-(C₂-C₁₈)-Alkinyl, S-(C₆-C₁₂)-Aryl, S-(C₃-C₁₀)-Cycloalkyl, (C₆-C₁₂)-Aryl-(C₁-C,₈)-Alkyl-S, OH, F, Cl, Br oder H;
- n: ist eine ganze Zahl von 0 bis 1000;
umfassend den folgenden Schritt:
a₁) Destillation einer Mischung, enthaltend Polyphenoldisulfide der Formel (I) und Leichtsieder, unter Bildung eines Destillationsrückstands a₁ und eines Destillats a₁, dadurch gekennzeichnet, dass ein Kurzwegverdampfer verwendet wird und dass die Polyphenoldisulfide der Formel (I) im Destillationsrückstand a₁ und die Leichtsieder im Destillat a₁ angereichert werden.

Das erfindungsgemäße Verfahren ist thermisch schonend und liefert Polyphenoldisulfide mit einem geringen Anteil an niedermolekularen, leichtflüchtigen Komponenten. Hiermit verbunden ist auch eine während ihrer Anwendung in Polymeren bei erhöhter Temperatur kaum oder gar nicht auftretende Geruchsentwicklung, z.B. bei der Extrusion oder beim Zuschnitt von Schaumstoffblöcken. Die erfindungsgemäß aufgereinigten Polyphenoldisulfide werden mit hohen Ausbeuten und Raum-Zeit-Ausbeuten erhalten, insbesondere auch dann, wenn das erfindungsgemäße Aufreinigungsverfahren mit einem der in den Patentanmeldungen EP 12156228 und EP 12159251 beschriebenen Herstellungsverfahren gekoppelt wird. Als weiterer Vorteil ist ein geringer Energieverbrauch zu nennen. Die erfindungsgemäß aufgereinigten Polyphenoldisulfide weisen vergleichsweise geringe Farbzahlen auf. Wird das erfindungsgemäße Verfahren kontinuierlich durchgeführt, so zeichnet sich dies zusätzlich durch den Wegfall von häufigem An- und Abfahren aus und somit auch durch eine Konstanz bestimmter Parameter wie der Temperatur über einen längeren Zeitraum. Damit verbunden sind z.B. besonders gute Produktqualitäten.

Im Rahmen der Erfindung umfasst der Begriff "Polyphenoldisulfid der Formel (I)" dimere Phenoldisulfide und polymere Phenoldisulfide.

Unter einem erfindungsgemäßen dimeren Phenoldisulfid oder einem erfindungsgemäßen Diphenoldisulfid versteht man eine Verbindung der Formel (I), wobei n 0 ist.

Beispiele für erfindungsgemäße dimere Phenoldisulfide oder erfindungsgemäße Diphenoldisulfide sind die Verbindungen Di-(tert.-butylphenol)disulfid und Di-(tert.-pentylphenol)disulfid.

Unter einem erfindungsgemäßen polymeren Phenoldisulfid versteht man eine Verbindung der Formel (I), wobei n nicht 0 ist und wobei höchstens 50%, vorzugsweise ≤ 35%, besonders bevorzugt ≤ 20% der in der Formel (I) enthaltenen (n+1) Disulfidbrücken durch eine Mono- oder Oligosulfidbrücke ersetzt sind. Im Rahmen der Erfindung versteht man unter einer Oligosulfidbrücke eine lineare Kette, bestehend aus 3 oder mehr, insbesondere 3 bis 8 Schwefelatomen.

Beispiele für erfindungsgemäße polymere Phenoldisulfide sind die Verbindungen Poly-(tert.-butylphenoldisulfid) und Poly-(tert.-pentylphenoldisulfid).

Gemäß einer besonderen Ausführungsform ist R⁴ in den Polyphenoldisulfiden der Formel (I) nicht SH. Bei Polyphenoldisulfiden der Formel (I) mit R⁴ ≠ SH handelt es sich also um Polyphenoldisulfide der Formel (I), in denen die Symbole R¹, R², R³, R⁴ und n folgende Bedeutungen haben:
- R¹, R², R³, R⁴: sind gleich oder verschieden C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl, eine Heteroarylgruppe, die ein oder mehrere Heteroatome aus der Gruppe N, O und S enthält, O-(C₁-C₁₈)-Alkyl, O-(C₂-C₁₈)-Alkenyl, O-(C₂-C₁₈)-Alkinyl, O-(C₆-C₁₂)-Aryl, O-(C₃-C₁₀)-Cycloalkyl, (C₆-C₁₂)-Aryl-(C₁-C₁₈)-Alkyl-O, S-(C₁-C₁₈)-Alkyl, S-(C₂-C₁₈)-Alkenyl, S-(C₂-C₁₈)-Alkinyl, S-(C₆-C₁₂)-Aryl, S-(C₃-C₁₀)-Cycloalkyl, (C₆-C₁₂)-Aryl-(C₁-C₁₈)-Alkyl-S, OH, F, Cl, Br oder H;
- n: ist eine ganze Zahl von 0 bis 1000.

Bevorzugt haben die Symbole in der Formel (I) folgende Bedeutungen:
- R²: ist bevorzugt gleich oder verschieden C₁-C₁₈-Alkyl, C₂-C₁₈-Alkenyl, C₂-C₁₈-Alkinyl, C₆-C₁₂-Aryl, C₃-C₁₀-Cycloalkyl, O-(C₁-C₁₈)-Alkyl, O-(C₂-C₁₈)-Alkenyl, O-(C₂-C₁₈)-Alkinyl, O-(C₆-C₁₂)-Aryl oder O-(C₃-C₁₀)-Cycloalkyl.
- R¹, R³: sind bevorzugt gleich oder verschieden H, C₁-C₁₈-Alkyl, C₂-C₁₈-Alkenyl, C₂-C₁₈-Alkinyl, C₆-C₁₂-Aryl, C₃-C₁₀-Cycloalkyl, O-(C₁-C₁₈)-Alkyl, O-(C₂-C₁₈)-Alkenyl, O-(C₂-C₁₈)-Alkinyl, O-(C₆-C₁₂)-Aryl oder O-(C₃-C₁₀)-Cycloalkyl.
- R⁴: ist bevorzugt SH oder H.
- n: ist bevorzugt eine ganze Zahl von 0 bis 500.

Bevorzugt sind Polyphenoldisulfide der Formel (I), in denen alle Symbole die bevorzugten Bedeutungen haben.

Besonders bevorzugt haben die Symbole in der Formel (I) folgende Bedeutungen:
- R²: ist besonders bevorzugt gleich oder verschieden C₁-C₁₆-Alkyl oder C₆-C₁₂-Aryl.
- R¹, R³: sind besonders bevorzugt gleich oder verschieden H, C₁-C₁₈-Alkyl, C₃-C₁₀-Cycloalkyl oder C₆-C₁₂-Aryl.
- R⁴: ist bevorzugt SH oder H.
- n: ist besonders bevorzugt eine ganze Zahl von 0 bis 250.

Besonders bevorzugt sind Polyphenoldisulfide der Formel (I), in denen alle Symbole die besonders bevorzugten Bedeutungen haben.

Ganz besonders bevorzugt haben die Symbole in der Formel (I) folgende Bedeutungen:
- R²: ist ganz besonders bevorzugt gleich oder verschieden C₁-C₁₀-Alkyl oder C₆-C₁₂-Aryl.
- R¹, R³: sind ganz besonders bevorzugt H.
- R⁴: ist ganz besonders bevorzugt SH oder H.
- n: ist ganz besonders bevorzugt eine ganze Zahl von 0 bis 150.

Ganz besonders bevorzugt sind Polyphenoldisulfide der Formel (I), in denen alle Symbole die ganz besonders bevorzugten Bedeutungen haben.

Weiterhin ganz besonders bevorzugt sind die Verbindungen Poly-(tert.-butylphenoldisulfid) und Poly-(tert.-pentylphenoldisulfid).

Ganz besonders bevorzugt sind auch die Verbindungen Di-(tert.-butylphenol)disulfid, Di-(tert.-pentylphenol)disulfid, Di-(para-phenylphenol)disulfid und Poly-(para-phenylphenoldisulfid):

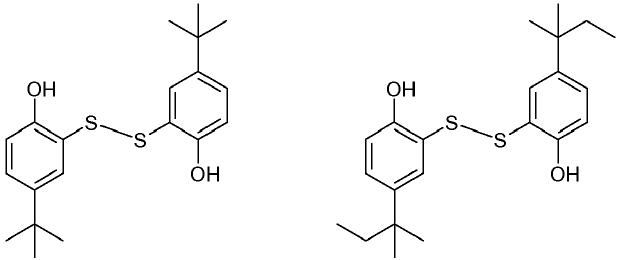

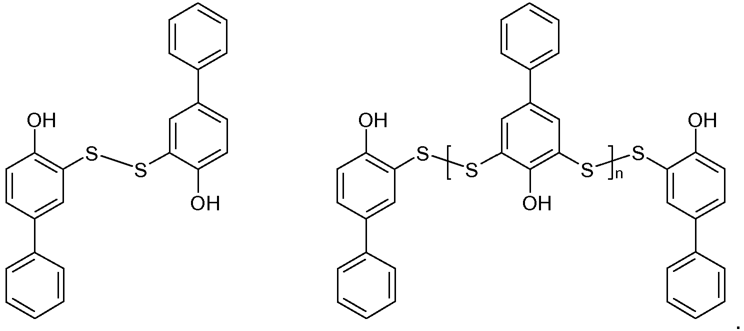

Insbesondere bevorzugt haben die Symbole in der Formel (I) folgende Bedeutungen:
- R²: ist insbesondere bevorzugt gleich oder verschieden t-C₄H₉ oder t-C₅H₁₁.
- R¹, R³: sind insbesondere bevorzugt H.
- R⁴: ist insbesondere bevorzugt SH oder H.
- n: ist insbesondere bevorzugt eine ganze Zahl von 3 bis 100.

Insbesondere bevorzugt sind Polyphenoldisulfide der Formel (I), in denen alle Symbole die insbesondere bevorzugten Bedeutungen haben.

Weiterhin insbesondere bevorzugt sind die Verbindungen Poly-(tert.-butylphenoldisulfid) und Poly-(tert.-pentylphenoldisulfid).

Ein weiteres Beispiel für eine Verbindung der Formel (I) ist Di-(ortho-phenylphenol)disulfid:

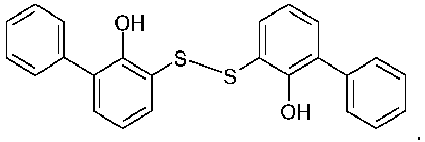

Weiterhin bevorzugt haben die Symbole in der Formel (I) folgende Bedeutungen:
- R²: ist bevorzugt gleich oder verschieden C₁-C₁₈-Alkyl, C₂-C₁₈-Alkenyl, C₂-C₁₈-Alkinyl, C₆-C₁₂-Aryl, C₃-C₁₀-Cycloalkyl, O-(C₁-C₁₈)-Alkyl, O-(C₂-C₁₈)-Alkenyl, O-(C₂-C₁₈)-Alkinyl, O-(C₆-C₁₂)-Aryl oder O-(C₃-C₁₀)-Cycloalkyl.
- R¹, R³, R⁴: sind bevorzugt gleich oder verschieden H, C₁-C₁₈-Alkyl, C₂-C₁₈-Alkenyl, C₂-C₁₈-Alkinyl, C₆-C₁₂-Aryl, C₃-C₁₀-Cycloalkyl, O-(C₁-C₁₈)-Alkyl, O-(C₂-C₁₈)-Alkenyl, O-(C₂-C₁₈)-Alkinyl, O-(C₆-C₁₂)-Aryl oder O-(C₃-C₁₀)-Cycloalkyl.
- n: ist bevorzugt eine ganze Zahl von 0 bis 500.

Bevorzugt sind auch Polyphenoldisulfide der Formel (I), in denen alle Symbole die weiterhin bevorzugten Bedeutungen haben.

Weiterhin besonders bevorzugt haben die Symbole in der Formel (I) folgende Bedeutungen:
- R²: ist besonders bevorzugt gleich oder verschieden C₁-C₁₆-Alkyl oder C₆-C₁₂-Aryl.
- R¹, R³, R⁴: sind besonders bevorzugt gleich oder verschieden H, C₁-C₁₈-Alkyl, C₃-C₁₀-Cycloalkyl oder C₆-C₁₂-Aryl.
- n: ist besonders bevorzugt eine ganze Zahl von 0 bis 250.

Besonders bevorzugt sind auch Polyphenoldisulfide der Formel (I), in denen alle Symbole die weiterhin besonders bevorzugten Bedeutungen haben.

Weiterhin ganz besonders bevorzugt haben die Symbole in der Formel (I) folgende Bedeutungen:
- R²: ist ganz besonders bevorzugt gleich oder verschieden C₁-C₁₀-Alkyl oder C₆-C₁₂-Aryl.
- R¹, R³, R⁴: sind ganz besonders bevorzugt H.
- n: ist ganz besonders bevorzugt eine ganze Zahl von 0 bis 150.

Ganz besonders bevorzugt sind auch Polyphenoldisulfide der Formel (I), in denen alle Symbole die weiterhin ganz besonders bevorzugten Bedeutungen haben.

Weiterhin insbesondere bevorzugt haben die Symbole in der Formel (I) folgende Bedeutungen:
- R²: ist insbesondere bevorzugt gleich oder verschieden t-C₄H₉ oder t-C₅H₁₁.
- R¹, R³, R⁴: sind insbesondere bevorzugt H.
- n: ist insbesondere bevorzugt eine ganze Zahl von 3 bis 100.

Insbesondere bevorzugt sind auch Polyphenoldisulfide der Formel (I), in denen alle Symbole die weiterhin insbesondere bevorzugten Bedeutungen haben.

Die zu destillierende Mischung kann Polyphenoldisulfide in beliebiger Menge enthalten, üblicherweise ≥ 50 Gew.-%. Vorzugsweise liegt der Anteil der Polyphenoldisulfide der Formel (I) an der gemäß Schritt a₁ zu destillierenden Mischung im Bereich von 70 bis 99,9 Gew.-%, besonders bevorzugt 80 bis 99,5 Gew.-%, ganz besonders bevorzugt 90 bis 99 Gew.-%, und insbesondere bevorzugt 90 bis 95 Gew.-%, bezogen auf die gemäß Schritt a₁ zu destillierende Mischung.

Leichtsieder im Sinne der vorliegenden Erfindung sind Verbindungen, deren Siedepunkte bei gleichen Bedingungen unterhalb, vorzugsweise 10 °C unterhalb des Siedebereichs der Polyphenoldisulfide der Formel (I) liegen. Beispielsweise sind Leichtsieder Verbindungen mit einem Siedepunkt von ≤ 220 °C bei einem Druck von 0,001 mbar.

Leichtsieder können nicht nur bereits vor der Destillation in der zu destillierenden Mischung enthalten sein, sondern sie können zusätzlich auch im Verlauf der Destillation, z.B. als Zersetzungsprodukte, entstehen. Beispiele für Leichtsieder sind Verbindungen, die bei der Herstellung der Polyphenoldisulfide der Formel (I) eingesetzt wurden, und Verbindungen, die als Zersetzungsprodukte bei deren Herstellung oder Aufreinigung entstanden sind.

Als Zersetzungsprodukte können z.B. Phenole, 2-Mercaptophenole, 2,6-Dimercaptophenole und/oder elementarer Schwefel entstehen.

In einer bevorzugten Ausführungsform umfassen die Leichtsieder eine oder mehrere Verbindungen aus der Gruppe Mercaptophenole der Formel (IIa), 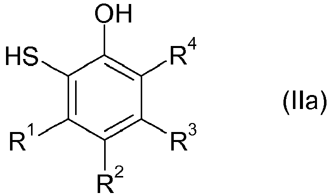 wobei die Symbole R¹, R², R³ die gleichen Bedeutungen wie in den Polyphenoldisulfiden der Formel (I) haben; und
R⁴ in den Mercaptophenolen der Formel (IIa) die gleiche Bedeutung wie in den Polyphenoldisulfiden der Formel (I) hat, wenn R⁴ in den Polyphenoldisulfiden der Formel (I) SH ist und/oder n 0 ist; und
R⁴ in den Mercaptophenolen der Formel (IIa) SH ist oder die gleiche Bedeutung wie in den Polyphenoldisulfiden der Formel (I) hat, wenn R⁴ in den Polyphenoldisulfiden der Formel (I) nicht SH ist und n größer als 0 ist;
Phenole der Formel (IIb), 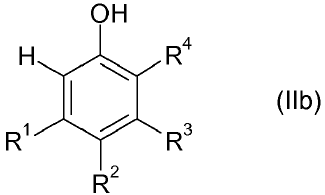 wobei die Symbole R¹, R², R³ die gleichen Bedeutungen wie in den Polyphenoldisulfiden der Formel (I) haben; und
R⁴ in den Phenolen der Formel (IIb) die gleiche Bedeutung wie in den Polyphenoldisulfiden der Formel (I) hat, wenn R⁴ in den Polyphenoldisulfiden der Formel (I) H ist und/oder n 0 ist; und
R⁴ in den Phenolen der Formel (IIb) H ist oder die gleiche Bedeutung wie in den Polyphenoldisulfiden der Formel (I) mit R⁴ ≠ SH hat, wenn R⁴ in den Polyphenoldisulfiden der Formel (I) mit R⁴ ≠ SH nicht H ist und n größer als 0 ist;
und elementarer Schwefel.

In einer weiteren bevorzugten Ausführungsform umfassen die Leichtsieder eine oder mehrere Verbindungen aus der Gruppe Mercaptophenole der Formel (IIa), 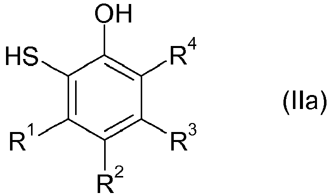 wobei die Symbole R¹, R², R³ die gleichen Bedeutungen wie in den Polyphenoldisulfiden der Formel (I) haben; und R⁴ SH oder H ist;
Phenole der Formel (IIb), 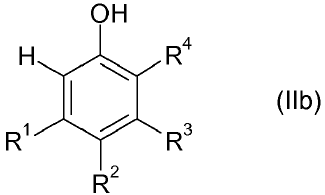 wobei die Symbole R¹, R², R³ die gleichen Bedeutungen wie in den Polyphenoldisulfiden der Formel (I) haben; und R⁴ H ist;
und elementarer Schwefel.

Ganz besonders bevorzugte Mercaptophenole der Formel (IIa) sind 4-(tert.-Butyl)-2-mercaptophenol, 4-(tert.-Butyl)-2,6-dimercaptophenol, 4-(tert.-Pentyl)-2-mercaptophenol, 4-(tert.-Pentyl)-2,6-dimercaptophenol, 4-(Phenyl)-2-mercaptophenol und 4-(Phenyl)-2,6-dimercaptophenol.

Ganz besonders bevorzugte Phenole der Formel (IIb) sind para-tert.-Butylphenol, para-tert.-Pentylphenol und para-Phenylphenol.

Insbesondere bevorzugte Mercaptophenole der Formel (IIa) sind 4-(tert.-Butyl)-2-mercaptophenol, 4-(tert.-Butyl)-2,6-dimercaptophenol, 4-(tert.-Pentyl)-2-mercaptophenol und 4-(tert.-Pentyl)-2,6-dimercaptophenol.

Insbesondere besonders bevorzugte Phenole der Formel (IIb) sind para-tert.-Butylphenol und para-tert.-Pentylphenol.

In einer weiteren bevorzugten Ausführungsform umfassen die Leichtsieder eine oder mehrere Verbindungen aus der Gruppe Phenole der Formel (IIc), 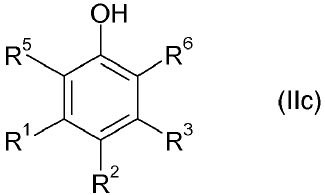 wobei die Symbole R¹, R², R³ die gleichen Bedeutungen wie in den Polyphenoldisulfiden der Formel (I) haben; R⁵ SH oder H ist; und R⁶ SH oder H ist;
und elementarer Schwefel.

Besonders bevorzugt haben die Symbole R¹, R², R³ in der Formel (IIc) die gleichen Bedeutungen wie in den Polyphenoldisulfiden der Formel (I); und R⁵ ist H; und R⁶ ist SH oder H.

In einer ganz besonders bevorzugten Ausführungsform umfassen die Leichtsieder eine oder mehrere Verbindungen aus der Gruppe 4-(tert.-Butyl)-2-mercaptophenol, 4-(tert.-Butyl)-2,6-dimercaptophenol, 4-(tert.-Pentyl)-2-mercaptophenol, 4-(tert.-Pentyl)-2,6-dimercaptophenol, 4-(Phenyl)-2-mercaptophenol, 4-(Phenyl)-2,6-dimercaptophenol, para-tert.-Butylphenol, para-tert.-Pentylphenol, para-Phenylphenol und elementarer Schwefel, vorzugsweise eine oder mehrere Verbindungen aus der Gruppe 4-(tert.-Butyl)-2-mercaptophenol, 4-(tert.-Pentyl)-2-mercaptophenol, 4-(Phenyl)-2-mercaptophenol, para-tert.-Butylphenol, para-tert.-Pentylphenol, para-Phenylphenol und elementarer Schwefel.

In einer insbesondere bevorzugten Ausführungsform umfassen die Leichtsieder eine oder mehrere Verbindungen aus der Gruppe 4-(tert.-Butyl)-2-mercaptophenol, 4-(tert.-Butyl)-2,6-dimercaptophenol, 4-(tert.-Pentyl)-2-mercaptophenol, 4-(tert.-Pentyl)-2,6-dimercaptophenol, para-tert.-Butylphenol, para-tert.-Pentylphenol und elementarer Schwefel, vorzugsweise eine oder mehrere Verbindungen aus der Gruppe 4-(tert.-Butyl)-2-mercaptophenol, 4-(tert.-Pentyl)-2-mercaptophenol, para-tert.-Butylphenol, para-tert.-Pentylphenol und elementarer Schwefel.

Weitere Beispiele für Leichtsieder sind die Verbindungen 6-(Phenyl)-2-mercaptophenol und ortho-Phenylphenol.

Die Leichtsieder können auch schwer flüchtige Lösungsmittel umfassen. Unter schwer flüchtigen Lösungsmitteln versteht man vorzugsweise solche mit einem Siedepunkt von ≥ 200 °C, bei Normaldruck (1013 mbar).

Beispiele für schwer flüchtige Lösungsmittel sind N-Methyl-2-pyrrolidinon (NMP), 1,3-Dimethyl-2-imidazolidinon (DMI), 1,3-Dimethyl-3,4,5,6-tetrahydro-2(1H)-pyrimidinon (DMPU), Sulfolan oder Ethylencarbonat.

Die Leichtsieder können aber auch Reste von leicht flüchtigen Lösungsmitteln umfassen (siehe weiter unten).

Die zu destillierende Mischung kann Leichtsieder in beliebiger Menge enthalten, üblicherweise ≤ 50 Gew.-%. Vorzugsweise liegt der Anteil der Leichtsieder an der gemäß Schritt a₁ zu destillierenden Mischung im Bereich von 0,1 bis 30 Gew.-%, besonders bevorzugt 0,5 bis 20 Gew.-%, ganz besonders bevorzugt 1 bis 10 Gew.-%, und insbesondere bevorzugt 5 bis 10 Gew.-%, bezogen auf die gemäß Schritt a₁ zu destillierende Mischung.

Der Begriff "Destillation" umfasst die Verdampfung und die anschließende Kondensation.

Im Rahmen der Erfindung versteht man unter einer Kurzwegdestillation oder unter einer "Destillation, dadurch gekennzeichnet, dass ein Kurzwegverdampfer verwendet wird" eine Destillation unter folgenden Bedingungen:

Bevorzugt liegen die Verdampferoberfläche und die Kondensatoroberfläche des Kurzwegverdampfers einander direkt gegenüber. Besonders bevorzugt sind dabei die Verdampferoberfläche und die Kondensatoroberfläche des Kurzwegverdampfers planparallel oder zylinderförmig angeordnet, wobei bei der zylinderförmigen Anordnung zwei Zylinder ineinander gesetzt sind.

Vorzugsweise wird bei der Destillation der Druck so weit abgesenkt, dass die mittlere freie Weglänge der verdampften Teilchen im Dampfraum größer ist als der Abstand zwischen Verdampferfläche und Kondensatorfläche. Der benötigte Druck hängt daher u. a. von den Apparatedimensionen und vom Dampfdruck der zu destillierenden Substanz bei der gewählten Temperatur ab (vgl. Kirk Othmer, Encyclopedia of chemical technology, 4th Ed., Wiley, Band 8, Seite 349). Geeignete Anordnungen sind z.B. beschrieben in: HJL Burgess (ed), Molecular Stills, Chapman and Hall, 1963.

Kurzwegverdampfer kommen bei der Destillation von thermisch empfindlichen Produkten zum Einsatz, da deren Destillation bei niedriger Siedetemperatur bevorzugt ist. Das Produkt sollte sich nur ganz kurz im Siedezustand befinden, um es vor Schädigung zu bewahren. Thermisch empfindliche Produkte werden vorzugsweise bei Unterdruck destilliert.

Das Prinzip der Kurzwegverdampfung beruht darauf, dass ein dem Verdampfer zugeführtes Stoffgemisch an einer Verdampferfläche erhitzt wird und die dabei verdampfenden Bestandteile des Stoffgemischs an einer der Verdampferfläche gegenüberliegenden Kondensatorfläche kondensieren. Um Druckverluste zu minimieren, wird der Abstand zwischen der Verdampferfläche und der Kondensatorfläche sehr gering gewählt.

Der erfindungsgemäß verwendete Kurzwegverdampfer umfasst eine Verdampferoberfläche und eine Kondensatoroberfläche. Im Rahmen der Erfindung ist mit Verdampferoberfläche die Verdampferoberfläche des erfindungsgemäß verwendeten Kurzwegverdampfers und mit Kondensatoroberfläche die Kondensatoroberfläche des erfindungsgemäß verwendeten Kurzwegverdampfers gemeint.

Die apparative Anordnung, umfassend die Verdampferoberfläche und die Kondensatoroberfläche, kann in beliebiger geometrischer Form ausgestaltet sein. Bevorzugt ist, dass die beiden Flächen einander direkt gegenüberliegen, so dass die Moleküle ungehindert von der Verdampferoberfläche zur Kondensatoroberfläche gelangen können. In Betracht kommt z.B. eine planparallele Anordnung der beiden Flächen oder auch eine zylinderförmige Anordnung, bei der zwei Zylinder ineinander gesetzt sind und die direkt gegenüberliegenden Flächen der beiden Zylinder die Verdampfer- und die Kondensatoroberfläche bilden. Die Verdampferoberfläche wird in geeigneter Weise beheizt, im Allgemeinen durch Vorrichtungen auf der Rückseite, und auch die Kondensatoroberfläche wird in geeigneter Weise gekühlt, im Allgemeinen ebenfalls durch Vorrichtungen auf der Rückseite.

Ein Merkmal der Kurzwegdestillation ist die Verdampfung der Leichtsieder aus einem Produktfilm heraus. Bevorzugt ist die mechanische Beeinflussung des Produktfilms durch sogenannte Wischersysteme. Die zu destillierende Mischung wird am oberen Ende des Apparats aufgegeben und durch das rotierende Wischersystem gleichmäßig auf dem inneren Umfang des Verdampfers verteilt. Das Produkt fließt als Film aufgrund der Schwerkraft an der von außen beheizten Verdampferfläche nach unten. Um eine gleichmäßige Benetzung der Verdampferfläche zu gewährleisten, eine intensive Durchmischung und eine hohe Turbulenz im Produktfilm zu erzeugen und damit die Verdampfungsleistung zu steigern, können die bekannten, gängigen Wischersysteme verwendet werden.

Die Verdampferoberfläche und die Kondensatoroberfläche können z.B. bei Apparaturen im technischen Maßstab jeweils größer als 0,1 m² sein.

Bei dem erfindungsgemäßen Verfahren werden Leichtsieder aus dem Gemisch abgetrennt und als Destillat von der Kondensatoroberfläche abgezogen. Das Wertprodukt, d.h. Polyphenoldisulfide der Formel (I), verbleibt auf der Verdampferoberfläche. Geeignete Vorrichtungen sind z.B. derart ausgestaltet, dass der Rückstand von der Verdampferoberfläche abläuft und aufgefangen wird, entsprechend fließen die Leichtsieder von der Kondensatoroberfläche ab und werden als Destillat erhalten.

In einer besonderen Ausführungsform ist der Abstand zwischen Verdampferoberfläche und Kondensatoroberfläche geringer als die mittlere freie Weglänge der Leichtsieder in der Gasphase bei der gewählten Temperatur und dem gewählten Druck. Die mittlere freie Weglänge lässt sich nach bekannten Verfahren bestimmen.

Der Abstand zwischen Verdampferoberfläche und Kondensatoroberfläche ist aufgrund konstruktiver Randbedingungen auch abhängig von der Größe des Apparates.

In einer Ausführungsform wird ein Kurzwegverdampfer verwendet, bei dem die Verdampferoberfläche und die Kondensatoroberfläche zylinderförmig angeordnet sind, und bei dem der Abstand zwischen Verdampferoberfläche und Kondensatoroberfläche bevorzugt im Bereich von 1/10 bis 1/3, besonders bevorzugt 1/8 bis 1/4 des Innendurchmessers des Gehäusemantels liegt.

In einer weiteren Ausführungsform liegt der Abstand zwischen Verdampferoberfläche und Kondensatoroberfläche im Bereich von 1 cm bis 100 cm.

Durch Anwendung des erfindungsgemäßen Verfahrens können überraschend hohe Produktreinheiten erzielt werden. Beispielsweise kann das aufgereinigte Produkt ≥ 80 Gew.-%, besonders bevorzugt ≥ 95 Gew.-% und ganz besonders bevorzugt ≥ 99 Gew.-% Polyphenoldisulfide der Formel (I) enthalten.

Die Verdampferoberfläche und die Kondensatoroberfläche können gleich groß oder unterschiedlich groß sein. Bevorzugt wird ein Kurzwegverdampfer verwendet, bei dem das Verhältnis der Verdampferoberfläche zur Kondensatoroberfläche im Bereich von 10:1 bis 1:10 liegt.

Vorzugsweise wird die Verdampfung bei einer Temperatur im Bereich von 150 °C bis 300 °C, besonders bevorzugt 150 °C bis 250 °C und ganz besonders bevorzugt 150°C bis 220 °C durchgeführt, wobei diese Angaben auf die mittlere Temperatur des Heizmediums, mit dem die Verdampferoberfläche beheizt wird, bezogen sind.

Unter der mittleren Temperatur des Heizmediums versteht man das arithmetische Mittel der Eintritts- und Austrittstemperatur des Heizmediums.

Vorzugsweise erfolgt die Kondensation bei einer Temperatur im Bereich von 0 °C bis 200 °C, besonders bevorzugt 10 °C bis 150 °C und ganz besonders bevorzugt 20 °C bis 100 °C, wobei diese Angaben auf die mittlere Temperatur des Kühlmediums, mit dem die Kondensatoroberfläche gekühlt wird, bezogen sind.

Unter der mittleren Temperatur des Kühlmediums versteht man das arithmetische Mittel der Eintritts- und Austrittstemperatur des Kühlmediums.

Im Allgemeinen wird die Destillation bei einem Druck im Bereich von 0,0001 mbar bis 10 mbar, bevorzugt 0,0001 mbar bis 1 mbar, besonders bevorzugt 0,0001 mbar bis 0,1 mbar, ganz besonders bevorzugt 0,0001 mbar bis 0,01 mbar, insbesondere bevorzugt 0,0005 mbar bis 0,0015 mbar durchgeführt. In einer besonderen Ausführungsform beträgt der Druck etwa 0,001 mbar. Im Rahmen der Erfindung ist mit Druck der absolute Druck gemeint.

Das erfindungsgemäße Aufreinigungsverfahren wird vorzugsweise kontinuierlich durchgeführt.

Die mittlere Verweilzeit des Destillationsrückstands a₁ auf der Verdampferoberfläche liegt bevorzugt im Bereich von 1 Sekunde bis 10 Minuten, besonders bevorzugt im Bereich von 1 Sekunde bis 5 Minuten und ganz besonders bevorzugt im Bereich von 1 Sekunde bis 2 Minuten. Unter der mittleren Verweilzeit versteht man die Zeit, welche der Destillationsrückstand a₁ im Mittel benötigt, um über die Verdampferoberfläche zu strömen. Die effektiven Verweilzeiten einzelner Teilchen können unterschiedlich sein, z.B. aufgrund von Strömungseffekten, Verwirbelungen. Zur Bestimmung der mittleren Verweilzeit können Tracer-Verbindungen, z.B. Farbstoffe oder radioaktiv markierte Verbindungen, vorzugsweise Farbstoffe, verwendet werden.

Bevorzugt wird die gemäß Schritt a₁ zu destillierende Mischung der Verdampferoberfläche des Kurzwegverdampfers in einer bestimmten Menge pro Stunde und pro Quadratmeter der Verdampferoberfläche zugeführt. Unter der spezifischen Zulaufmenge versteht man die Masse der gemäß Schritt a₁ zu destillierenden Mischung, welche der Verdampferoberfläche des Kurzwegverdampfers in einer (1) Stunde zugeführt wird, bezogen auf einen (1) Quadratmeter der Verdampferoberfläche. Vorzugsweise liegt die spezifische Zulaufmenge der gemäß Schritt a₁ zu destillierenden Mischung im Bereich von 5 kg/h/m² bis 100 kg/h/m², besonders bevorzugt 10 kg/h/m² bis 80 kg/h/m² und ganz besonders bevorzugt 20 kg/h/m² bis 40 kg/h/m², bezogen auf 1 Stunde und 1 Quadratmeter der Verdampferoberfläche des Kurzwegverdampfers. Bei Überschreiten des oberen Werts von 100 kg/h/m² wird zu viel Wertprodukt ins Destillat übertragen. Die Unterschreitung des unteren Werts von 5 kg/h/m² führt zu einem unwirtschaftlichen Verfahren da bei gegebener Zulaufmenge die beheizte Verdampferoberfläche des Kurzwegverdampfers zu groß oder bei gegebener beheizter Verdampferoberfläche des Kurzwegverdampfers die Zulaufmengen zu klein werden.

In einer bevorzugten Ausführungsform wird ein Spritzschutz zwischen Verdampfer- und Kondensatoroberfläche eingesetzt, um einen ungewünschten Übertritt von Wertprodukt von der Verdampferoberfläche zur Kondensatoroberfläche, beispielsweise durch Mitreißen oder Spritzen, zu reduzieren oder vollständig zu vermeiden.

Als Spritzschutz werden überwiegend Jalousien verwendet, die meist vertikal angeordnete Lamellen aus Metall oder Kunststoff umfassen. Der horizontale Abstand der Lamellen ist so zu wählen, dass ein Übertritt von Flüssigkeitströpfchen von der Verdampferoberfläche zur Kondensatoroberfläche reduziert oder ganz unterbunden wird. Bevorzugt weist der eingesetzte Spritzschutz einen Druckverlust von kleiner 0,1 mbar, besonders bevorzugt kleiner 0,01 mbar, ganz besonders bevorzugt kleiner 0,001 mbar auf.

Die Befestigung des Spritzschutzes kann sowohl an einem Wischersystem als auch an einem innenliegenden Kondensator erfolgen. Ausführung, Material und Art der Befestigung des Spritzschutzes sind für die vorliegende Erfindung unerheblich, solange der Übertritt von Flüssigkeitströpfchen verhindert oder reduziert und ein nur geringer Druckverlust (wie oben beschrieben) eingehalten wird.

Der Zusatz von Sumpfverdünnern kann vorteilhaft sein, um gegen Ende der Destillation noch eine hinreichend gute Fließfähigkeit zu gewährleisten. Bevorzugte Sumpfverdünner sind polymere Glykolether, insbesondere Polyethylenglykole wie z.B. Pluriol® E 600.

Sumpfverdünner und Wertprodukt können z.B. durch Destillation voneinander getrennt werden. Es können auch Sumpfverdünner verwendet werden, die nicht vom Wertprodukt abgetrennt werden müssen, da sie als Additiv zusammen mit dem Wertprodukt in Polymeren eingesetzt werden können.

In einer Ausführungsform umfasst das erfindungsgemäße Verfahren die folgenden zusätzlichen Schritte:
aₓ) Destillation des in Schritt aₓ₋₁ gebildeten Destillationsrückstands aₓ₋₁ unter Bildung eines
   Destillationsrückstands aₓ und eines Destillats aₓ, dadurch gekennzeichnet, dass ein Kurzwegverdampfer verwendet wird und dass die Polyphenoldisulfide der Formel (I) im Destillationsrückstand aₓ und die Leichtsieder im Destillat aₓ angereichert werden, wobei x 2, 3, 4 oder 5 ist.

Die Schritte aₓ werden vorzugsweise unter den Bedingungen durchgeführt, die für Schritt a₁ bevorzugt, besonders bevorzugt oder ganz besonders bevorzugt sind.

Weiterhin bevorzugt wird Schritt aₓ auch bei einer Temperatur durchgeführt, die in den für Schritt a₁ angegebenen Bereichen liegt, und die höher ist als die Temperatur, bei der Schritt aₓ₋₁ durchgeführt wird.

Ebenfalls bevorzugt wird Schritt aₓ auch bei einem Druck durchgeführt, der in den für Schritt a₁ angegebenen Bereichen liegt, und der geringer ist als der Druck, bei der Schritt aₓ₋₁ durchgeführt wird.

Weiterhin bevorzugt erfolgt die Durchführung von Schritt aₓ auch bei einer Temperatur, die in den für Schritt a₁ angegebenen Bereichen liegt, und die höher ist als die Temperatur, bei der Schritt aₓ₋₁ durchgeführt wird, und bei einem Druck, der in den für Schritt a₁ angegebenen Bereichen liegt, und der geringer ist als der Druck, bei der Schritt aₓ₋₁ durchgeführt wird.

In einer weiteren Ausführungsform umfasst das erfindungsgemäße Verfahren den folgenden zusätzlichen Schritt:
b₁) Destillation des in einem der Schritte a₁ oder aₓ gebildeten Destillationsrückstands a₁ oder
   aₓ unter Bildung eines Destillationsrückstands b₁ und eines Destillats b₁, dadurch gekennzeichnet, dass ein Kurzwegverdampfer verwendet wird und dass die Polyphenoldisulfide der Formel (I) im Destillat b₁ angereichert werden.

In einer weiteren Ausführungsform umfasst das erfindungsgemäße Verfahren die folgenden zusätzlichen Schritte:
b_{y}) Destillation des in Schritt b_{y-1} gebildeten Destillats b_{y-1} unter Bildung eines Destillationsrückstands b_{y} und eines Destillats b_{y}, dadurch gekennzeichnet, dass ein Kurzwegverdampfer verwendet wird und dass die Polyphenoldisulfide der Formel (I) im Destillat b_{y} angereichert werden, wobei y 2 oder 3 ist.

Eine bevorzugte Anlage zur Durchführung des erfindungsgemäßen Verfahrens umfasst einen oder mehrere, insbesondere einen, zwei, drei oder vier Kurzwegverdampfer. Vorzugsweise sind die zwei, drei oder vier Kurzwegverdampfer so miteinander verbunden, dass der Rückstand des ersten Kurzwegverdampfers in den zweiten Kurzwegverdampfer, dass (falls ein dritter Kurzwegdampfer von der Anlage umfasst wird) der Rückstand des zweiten Kurzwegverdampfers in den dritten Kurzwegverdampfer und dass (falls ein vierter Kurzwegdampfer von der Anlage umfasst wird) der Rückstand des dritten Kurzwegverdampfers in den vierten Kurzwegverdampfer geleitet wird.

Gemäß einer weiteren Ausführungsform der vorliegenden Erfindung wird das aufzureinigende Gemisch mehrfach, insbesondere zweimal, dreimal oder viermal mit einem Kurzwegverdampfer aufgereinigt, wobei mindestens ein Teil des jeweiligen Rückstands ein weiteres Mal verdampft und kondensiert wird.

Gemäß einer weiteren Ausführungsform der vorliegenden Erfindung wird das aufzureinigende Gemisch mehrfach, insbesondere zweimal, dreimal oder viermal mit einem Kurzwegverdampfer aufgereinigt, wobei mindestens ein Teil eines oder mehrerer Destillate ein weiteres Mal verdampft und kondensiert wird.

Sofern leicht flüchtige Lösungsmittel zunächst in dem aufzureinigenden Gemisch vorhanden sind, werden sie vorzugsweise vor Durchführung von Schritt a₁ des erfindungsgemäßen Verfahrens weitgehend entfernt, so dass ihr Gehalt in der gemäß Schritt a₁ zu destillierenden Mischung maximal 10 Gew.-%, bevorzugt maximal 5 Gew.-%, besonders bevorzugt maximal 2 Gew.-% beträgt. Insbesondere bevorzugt werden sie vollständig entfernt.

Unter leicht flüchtigen Lösungsmitteln versteht man vorzugsweise solche mit einem Siedepunkt kleiner 200 °C, insbesondere kleiner 150 °C, bei Normaldruck (1013 mbar).

Beispiele für leicht flüchtige Lösungsmittel sind Wasser; Alkohole wie Methanol, Ethanol, 1-Propanol, 2-Propanol, 1-Butanol, 2-Butanol, 2-Methylpropanol oder tert.-Butanol; dipolar aprotische Lösungsmittel wie N,N-Dimethylformamid (DMF), N,N-Diethylformamid, N,N-Dimethylacetamid (DMAC), N,N-Dimethylpropionamid, N,N,N',N'-Tetramethylharnstoff, Dimethylsulfoxid, Acetonitril, Propionitril, Butyronitril oder Benzonitril; Ester wie Methylacetat, Ethylacetat, n-Butylacetat oder Isobutylacetat; Ether wie Diethylether, Diisopropylether, Dibutylether, Methyl-tert.-butylether (MTBE), Tetrahydrofuran (THF), Dioxan oder 1,2-Dimethoxyethan (DME); aromatische Kohlenwasserstoffe wie Benzol, Toluol, Ethylbenzol, Cumol, Xylole oder Mesitylen; aliphatische Kohlenwasserstoffe wie Hexan oder Cyclohexan; Carbonate wie Diethylcarbonat; Amine wie Triethylamin, Diethylamin, N-Ethyldiisopropylamin, Pyridin, Lutidin oder Collidin.

Vorzugsweise erfolgt die weitgehende oder vollständige Entfernung von leicht flüchtigen Lösungsmitteln durch Destillation.

Die Destillation der leicht flüchtigen Lösungsmittel findet besonders bevorzugt als Verdampfung mit einer oder mehreren hintereinandergeschalteten Stufen und Kondensation mit dem Fachmann an sich bekannten Verdampfern statt. Beispiele für geeignete Verdampfer für die eine oder mehreren Verdampferstufen sind Naturumlaufverdampfer, Zwangsumlaufentspannungsverdampfer, Fallfilmverdampfer, Wendelrohrverdampfer, Dünnschichtverdampfer und Kurzwegverdampfer. Als besonders bevorzugt gelten Verdampfer, die für das gewünschte Erreichen des Verdampfungsgrades eine möglichst niedrige Verdampferoberflächentemperatur und eine kurze Kontaktzeit an der Verdampferoberfläche und damit geringe thermische Schädigung des Gemisches ermöglichen wie z.B. Fallfilmverdampfer, Wendelrohrverdampfer, Dünnschichtverdampfer und Kurzwegverdampfer.

Die nach dem erfindungsgemäßen Verfahren aufzureinigenden Polyphenoldisulfide der Formel (I) sind kommerziell erhältlich und/oder können zum Beispiel nach in der Patentschrift US 3,968,062 oder nach in den nicht vorveröffentlichten Patentanmeldungen EP 12156228 und EP 12159251 beschriebenen Verfahren hergestellt werden.

Beispielsweise können die insbesondere bevorzugten Polyphenoldisulfide der Formel (I), Poly-(tert.-butylphenoldisulfid) und Poly-(tert.-pentylphenoldisulfid), als VULTAC® TB7 bzw. VULTAC® 2 und 3 von der Firma Arkema kommerziell bezogen werden.

Auf die europäischen Patentanmeldungen mit den Anmeldenummern EP 12156228 und EP 12159251 wird hiermit ausdrücklich Bezug genommen. Sie gelten durch Zitat als Bestandteil der vorliegenden Anmeldung.

In einer bevorzugten Ausführungsform werden die nach dem erfindungsgemäßen Verfahren aufzureinigenden Polyphenoldisulfide der Formel (I), insbesondere auch die Verbindungen Poly-(tert.-butylphenoldisulfid) und Poly-(tert.-pentylphenoldisulfid), hergestellt durch das folgende Verfahren ("Verfahren A"):

Umsetzung von einem oder mehreren Mercaptophenolen der Formel (IIa) 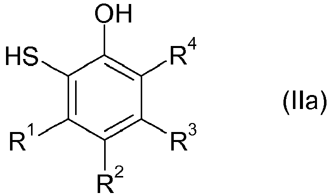 mit einem oder mehreren Oxidationsmitteln,
gegebenenfalls in Anwesenheit einer oder mehrerer Basen,
wobei die Symbole R¹, R², R³, R⁴ und n die gleichen Bedeutungen wie in den Polyphenoldisulfiden der Formel (I) haben;
mit der Maßgabe, dass R⁴ in mindestens einem der einen oder mehreren Mercaptophenole der Formel (IIa) SH ist, wenn n größer als 0 ist;
In Verfahren A ist der Einsatz von einem (1) Oxidationsmittel bevorzugt. Ein besonders bevorzugtes Oxidationsmittel ist molekularer Sauerstoff. Molekularer Sauerstoff wird vorzugsweise in Form von Luft eingesetzt. Bevorzugt ist auch der Einsatz von mit Sauerstoff abgereicherter Luft, wobei der Sauerstoffgehalt bis auf 15 Vol.-%, vorzugsweise bis auf 7 Vol.-%, besonders bevorzugt bis auf 5 Vol.-% abgereichert ist.

Das Verfahren A wird vorzugsweise in Anwesenheit einer oder mehrerer Basen durchgeführt. Ganz besonders bevorzugt ist der Einsatz von einer (1) Base. Eine besonders bevorzugte Base ist Ammoniumhydroxid.

In einer weiteren bevorzugten Ausführungsform werden die nach dem erfindungsgemäßen Verfahren aufzureinigenden Polyphenoldisulfide der Formel (I) mit R⁴ ≠ SH, insbesondere auch die Verbindungen Poly-(tert.-butylphenoldisulfid) und Poly-(tert.-pentylphenoldisulfid), hergestellt durch das folgende Verfahren ("Verfahren B"):

Umsetzung von einem oder mehreren Phenolen der Formel (IIb) 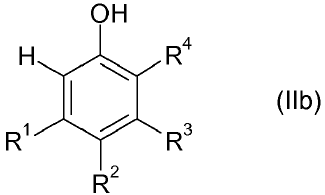 mit S₂Cl₂ in einem Lösungsmittel L,
wobei das Lösungsmittel L die Eigenschaft besitzt, dass
es mindestens 80 mol-% der im Laufe der Umsetzung entstehenden HCl komplexiert und/oder neutralisiert; oder
mindestens 80 mol-% der im Laufe der Umsetzung entstehenden HCl in dem Lösungsmittel L unlöslich ist; und
wobei die Symbole R¹, R², R³, R⁴ und n die gleichen Bedeutungen wie in den Polyphenoldisulfiden der Formel (I) mit R⁴ ≠ SH haben;
mit der Maßgabe, dass R⁴ in mindestens einem der einen oder mehreren Phenole der Formel (IIb) H ist, wenn n größer als 0 ist;

In Verfahren B enthält das Lösungsmittel L vorzugsweis eine oder mehrere Lewis- und/oder Bronsted-basische Lösungsmittelkomponenten, welche HCl komplexieren und/oder neutralisieren. Das Lösungsmittel L enthält besonders bevorzugt eine oder zwei Lösungsmittelkomponenten. Ganz besonders bevorzugte Lewis- und/oder Bronsted-basische Lösungsmittelkomponenten sind N,N-Dimethylformamid, N,N,N',N'-Tetramethylharnstoff, 1,3-Dimethyl-2-imidazolidinon, 1,3-Dimethyl-3,4,5,6-tetrahydro-2(1H)-pyrimidinon. Insbesondere bevorzugte Lewis- und/oder Bronsted-basische Lösungsmittelkomponenten sind DMF und N,N,N',N'-Tetramethylharnstoff.

Gegenstand der Erfindung sind auch Polyphenoldisulfide der Formel (I), erhältlich durch das erfindungsgemäße Verfahren.

Erfindungsgemäß sind in einem solchen Polyphenoldisulfid mit n ≠ 0 höchstens 50%, vorzugsweise ≤ 35%, besonders bevorzugt ≤ 20% der in der Formel (I) enthaltenen (n+1) Disulfidbrücken durch eine Mono- oder Oligosulfidbrücke ersetzt.

Weiterhin Gegenstand der Erfindung ist ein Flammschutzsystem, enthaltend
i) erfindungsgemäß aufgereinigte Polyphenoldisulfide der Formel (I); und
ii) mindestens eine halogenfreie organische Phosphorverbindung mit einem Phosphorgehalt im Bereich von 0,5 bis 40 Gew.-%, bezogen auf die Phosphorverbindung.

Ein weiterer Gegenstand der Erfindung ist eine Polymerzusammensetzung, enthaltend ein oder mehrere Polymere und das erfindungsgemäße Flammschutzsystem.

Die nach dem erfindungsgemäßen Verfahren aufgereinigten Polyphenoldisulfide eignen sich beispielsweise als Flammschutzsynergisten in Polymeren. Bevorzugt ist die Verwendung in Schaumstoffen, insbesondere in auf Polystyrol basierenden Schaumstoffen.

Der erfindungsgemäß aufgereinigte Flammschutzsynergist wird in Mischung mit einem oder mehreren Flammschutzmitteln und gegebenenfalls mit weiteren Synergisten für die Herstellung flammhemmend ausgerüsteter (bzw. flammgeschützter) Polymere, insbesondere thermoplastischer Polymere, verwendet. Hierfür werden die Flammschutzmittel und Synergisten vorzugsweise physikalisch mit dem entsprechenden Polymer in der Schmelze vermischt und dann entweder als Polymermischung zunächst fertig konfektioniert und dann in einem zweiten Verfahrensschritt zusammen mit dem gleichen oder einem anderen Polymer weiterverarbeitet. Alternativ ist im Falle von Styrolpolymeren auch der Zusatz der Flammschutzmittel und Synergisten vor, während und/oder nach der Herstellung durch Suspensionspolymerisation bevorzugt.

Als Polymer können beispielsweise geschäumte oder ungeschäumte Styrolpolymere, einschließlich ABS, ASA, SAN, AMSAN, SB und HIPS Polymere, Polyimide, Polysulfone, Polyolefine wie Polyethylen und Polypropylen, Polyacrylate, Polyetheretherketone, Polyurethane, Polycarbonate, Polyphenylenoxide, ungesättigte Polyesterharze, Phenolharze, Polyamide, Polyethersulfone, Polyetherketone und Polyethersulfide, jeweils einzeln oder in Mischung als Polymerblends eingesetzt werden.

Bevorzugt sind thermoplastische Polymere wie geschäumte oder ungeschäumte Styrolhomopolymere und -copolymere jeweils einzeln oder in Mischung als Polymerblends.

Erfindungsgemäß umfasst der Begriff Styrolpolymer Polymere auf Basis von Styrol, alpha-Methylstyrol oder Mischungen von Styrol- und alpha-Methylstyrol; analog gilt dies für den Styrolanteil in SAN, AMSAN, ABS, ASA, MBS und MABS (siehe unten). Erfindungsgemäße Styrolpolymere basieren auf mindestens 50 Gew.-Teilen Styrol und/oder alpha-Methylstyrol Monomeren.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-alpha-Methylstyrolcopolymere, Acrylnitril-Butadien-Styrolpolymerisate (ABS), Styrol-Acrylnitril-Copolymere (SAN), Acrylnitril-alpha-Methylstyrol-Copolymere (AMSAN), Acrylnitril-Styrol-Acrylester (ASA), Methylacrylat-Butadien-Styrol (MBS), Methylmethacrylat-Acrylnitril-Butadien-Styrol (MABS)-polymerisate oder Mischungen davon oder mit Polyphenylenether (PPE) eingesetzt.

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen wie Polypropylen (PP) oder Polyethylen (PE), Polyacrylaten wie Polymethylmethacrylat (PMMA), Polycarbonat (PC), Polyestern wie Polyethylenterephthalat (PET) oder Polybutylenterephthalat (PBT), Polyethersulfonen (PES), Polyetherketonen oder Polyethersulfiden (PES) oder Mischungen davon in Anteilen von insgesamt bis maximal 30 Gew.-Teilen, bevorzugt im Bereich von 1 bis 10 Gew.-Teilen, bezogen auf 100 Gew.-Teile der Polymerschmelze, enthalten. Des Weiteren sind Mischungen in den genannten Mengenbereichen auch mit zum Beispiel hydrophob modifizierten oder funktionalisierten Polymeren oder Oligomeren, Kautschuken wie Polyacrylaten oder Polydienen, zum Beispiel Styrol-Butadien-Blockcopolymeren oder biologisch abbaubaren aliphatischen oder aliphatisch/aromatischen Copolyestern möglich.

Bevorzugt sind flammgeschützte Polymerschaumstoffe, insbesondere auf Basis von Styrolpolymeren, vorzugsweise EPS und XPS.

Die expandierbaren Styrolpolymere (EPS) können entweder im Extrusionsverfahren oder mittels Suspensionspolymerisation in wässriger Suspension in Gegenwart eines Flammschutzmittels, des erfindungsgemäßen Synergisten und eines organischen Treibmittels hergestellt werden.

Die flammgeschützten Polymerschaumstoffe weisen bevorzugt eine Dichte im Bereich von 5 bis 200 kg/m³, besonders bevorzugt im Bereich von 10 bis 50 kg/m³, auf und sind bevorzugt zu mehr als 80%, besonders bevorzugt zu 90 bis 100% geschlossenzellig.

Die Erfindung wird durch die nachfolgenden Beispiele näher erläutert.

### Beispiele

### A Herstellungsbeispiele

### Beispiel 1

In einem Kurzwegverdampfer wurde eine Zusammensetzung eingeleitet, die ca. 95 Gew.-% Polyphenoldisulfide (enthaltend dimere und polymere Phenoldisulfideinheiten, Monosulfideinheiten) (kommerzielle Ware von Arkema; Vultac® 3) enthielt. Der Druck (0,001 mbar) im Kurzwegverdampfer und die Temperatur (180 °C) des Heizmediums wurden so eingestellt, dass eine spezifische Zulaufbelastung von 10 kg/h/m² erhalten wurde. Bei diesen Bedingungen wurden Verunreinigungen mit einem niedrigen Siedepunkt durch Verdampfung kontinuierlich abgetrennt, wobei die aufzureinigenden Polyphenoldisulfide im Rückstand verblieben. In diesem Verdampfungsschritt wurden die Leichtsieder kontinuierlich verdampft. Der bei diesem Schritt erhaltene Sumpfaustrag enthielt ca. 99 Gew.-% Polyphenoldisulfide (enthaltend dimere und polymere Phenoldisulfideinheiten, Monosulfideinheiten).

Im Destillat und im Rückstand des Kurzwegverdampfers wurden keine wesentlichen Zersetzungsprodukte der zugeführten Ausgangsmischung festgestellt. Die so gewonnenen Polyphenoldisulfide führten in der nachfolgenden Anwendung als Flammschutzmittel zu einem spezifikationsgerechten Wertprodukt.

In Beispiel 1 wird gezeigt, dass durch Aufreinigung unter Verwendung eines Kurzwegverdampfers Polyphenoldisulfide mit einer sehr hohen Reinheit erhalten werden.

### Vergleichsbeispiel 1

In einem Dünnschichtverdampfer wurde eine Zusammensetzung eingeleitet, die ca. 95 Gew.-% Polyphenoldisulfide (enthaltend dimere und polymere Phenoldisulfideinheiten, Monosulfideinheiten) (kommerzielle Ware von Arkema; Vultac® 3) enthielt. Der Druck (1 mbar) im Dünnschichtverdampfer und die Temperatur (250 °C) des Heizmediums wurden so eingestellt, dass eine spezifische Zulaufbelastung von 10 kg/h/m² erhalten wurde. Bei diesen Bedingungen wurden Verunreinigungen mit einem niedrigen Siedepunkt durch Verdampfung kontinuierlich abgetrennt, wobei die aufzureinigenden Polyphenoldisulfide im Rückstand verblieben. In diesem Verdampfungsschritt wurden die Leichtsieder kontinuierlich verdampft. Der bei diesem Schritt erhaltene Sumpfaustrag enthielt ca. 97 Gew.-% Polyphenoldisulfide (enthaltend dimere und polymere Phenoldisulfideinheiten, Monosulfideinheiten).

Im Destillat und im Rückstand des Dünnschichtverdampfers wurden wesentliche Zersetzungsprodukte der zugeführten Ausgangsmischung festgestellt. Die Reinheit der so gewonnenen Polyphenoldisulfide erwies sich für die weitere Anwendung als Flammschutzmittel als weniger geeignet. Beim Aufschäumen und Heißdrahtschneiden der Neoporblöcke wurden signifikante Gerüche von schwefelhaltigen Verbindungen wahrgenommen.

Die Verwendung eines Kurzwegverdampfers (Beispiel 1), mit dem geringere Drücke erzielt werden können und bei dem dadurch auch geringere Temperaturen erforderlich sind, führt im Vergleich zur Verwendung eines Dünnschichtverdampfers (Vergleichsbeispiel 1) zu Polyphenoldisulfiden mit einer höheren Reinheit.

### B Flammschutzmittel und Synergisten

In den Beispielen wurden das Flammschutzmittel FR1 sowie die Synergisten S1 bis S3 eingesetzt.

Flammschutzmittel:

| | |
|---|---|
| Phosphorsäure-6-(diphenoxy-phosphoryloxy)-hexahydro-furo[3,2-b]-furan-3yl-ester diphenylester | FR1 |

Synergisten:

| | |
|---|---|
| Poly-(tert.-pentylphenoldisulfid) | S1 |
| Poly-(tert.-pentylphenoldisulfid) | S2 |
| Poly-(tert.-pentylphenoldisulfid) | S3 |

Die in den Beispielen eingesetzten Flammschutzmittel und Synergisten wurden kommerziell erworben, nach bekannten Vorschriften oder wie unter Punkt A beschrieben hergestellt.
- FR1:: Synthetisiert wie in WO 2011/083009 beschrieben.
- S1:: Vultac® 3 der Firma Arkema.
- S2, S3:: Vultac® 3 der Firma Arkema, behandelt gemäß Beispiel 1 bzw. Vergleichsbeispiel 1 (siehe Punkt A).

### C Anwendungsbeispiele

### Beschreibung der Versuche:

Die Ermittlung des Brandverhaltens der Schaumstoffplatten erfolgte, wenn nicht anders angegeben, bei einer Schaumstoffdichte von 15 kg/m³ nach DIN 4102.

### Expandierbare Styrolpolymerisate (Extrusionsprozess):

7 Gew.-Teile n-Pentan wurden in Polystyrol 158K (Mw = 261 000 g/mol, Mn = 77 000 g/mol bestimmt mittels GPC, RI-Detektor, PS als Standard) der BASF SE mit einer Viskositätszahl von 98 ml/g eingemischt. Nach Abkühlen der treibmittelhaltigen Schmelze von ursprünglich 260 °C auf eine Temperatur von 190 °C wurde eine Polystyrolschmelze, welche die in der Tabelle genannten Flammschutzsysteme und optional athermane Verbindungen wie Graphit, Ruß, etc. enthielt, über einen Seitenstromextruder in den Hauptstrom eingemischt.

Die angegebenen Mengen in Gew.-Teilen beziehen sich auf die gesamte Polystyrolmenge (100 Teile).

Das Gemisch aus Polystyrolschmelze, Treibmittel und Flammschutzmittel wurde mit 60 kg/h durch eine Düsenplatte mit 32 Bohrungen (Durchmesser der Düsen: 0,75 mm) gefördert. Mit Hilfe einer druckbeaufschlagten Unterwassergranulierung wurden kompakte Granulate mit enger Größenverteilung hergestellt.

Das Molekulargewicht der Granulate betrug 220 000 g/mol (Mw) bzw. 80 000 g/mol (Mn) (bestimmt mittels GPC, RI-Detektor, PS als Standard).

Durch Einwirkung von strömendem Wasserdampf wurden die Granulate vorgeschäumt und nach 12-stündiger Lagerung durch weitere Behandlung mit Wasserdampf in einer geschlossenen Form zu Schaumstoffblöcken einer Dichte von 15 kg/m³ verschweißt.

Die Schaumstoffblöcke wurden nachfolgend mittels Heißdrahtschnitt mit einem Styropor-Glühdrahtschneidegerät der Firma Charlotte Kaiser, 67071 Ludwigshafen, Leistung: 180 VA,

Primär: 230 V, Sekundär: 0 - 12 V, 15 A) bzw. mittels Kaltdrahtschnitt mit einem oszillierenden Kaltdrahtschneidegeräht der Firma Nuova Idro Press LL, Nr. 397 (Baujahr 1993, Via Consolini, 10, 42026 Ciano d'Enza di Canossa, Italien) in die entsprechenden Normprüfkörper, z.B. für die Ermittlung des Brandverhaltens nach DIN 4102, zugeschnitten.

Die Ergebnisse des Zuschnitts sind in den Tabellen 1 und 2 zusammengestellt.

**Tabelle 1: Geruchsentwicklung von erfindungsgemäßer Polymerzusammensetzung beim Heißdrahtschnitt (Beispiele) und von Vergleichsbeispielen**

| Beispiel | Flammschutzsystem (Gew.-Teile bezogen auf Polystyrol) | Schaumstoffdichte [kg/m³] (ISO 845) | Geruch beim Zuschnitt |
|---|---|---|---|
| 1 | FR1 (2,0) + S1 (3,5) | 14,8 | signifikant / schwefelig |
| 2 | FR1 (2,0) + S2 (3,5) | 15,3 | unauffällig |
| 3 | FR1 (2,0) + S3 (3,5) | 15,4 | signifikant / schwefelig |

**Tabelle 2: Geruchsentwicklung von erfindungsgemäßer Polymerzusammensetzung beim oszillierenden Kaltdrahtschitt (Beispiele) und von Vergleichsbeispielen**

| Beispiel | Flammschutzsystem (Gew.-Teile bezogen auf Polystyrol) | Schaumstoffdichte [kg/m³] (ISO 845) | Geruch beim Zuschnitt |
|---|---|---|---|
| 1 | FR1 (2,0) + S1 (3,5) | 14,8 | signifikant / schwefelig |
| 2 | FR1 (2,0) + S2 (3,5) | 15,3 | unauffällig |
| 3 | FR1 (2,0) + S3 (3,5) | 15,4 | signifikant / schwefelig |

Die Ermittlung des Brandverhaltens der Schaumstoffplatten erfolgte nach 72-stündiger Lagerung bei einer Schaumstoffdichte von 15 kg/m³ nach DIN 4102.

Die Brandergebnisse sind in Tabelle 3 zusammengestellt.

**Tabelle 3: Brandverhalten von erfindungsgemäßer Polymerzusammensetzung (Beispiele) und von Vergleichsbeispielen**

| Beispiel | Flammschutzsystem (Gew.-Teile bezogen auf Polystyrol) | Brandtest (B2 nach DIN 4102) / Verlöschzeit (s) |
|---|---|---|
| 1 | FR1 (2,0) + S1 (3,5) | bestanden / 5 s |
| 2 | FR1 (2,0) + S2 (3,5) | bestanden / 6 s |
| 3 | FR1 (2,0) + S3 (3,5) | bestanden / 6 s |

### Extrudierte Polystyrol-Schaumstoffplatten:

100 Gew.-Teile Polystyrol 158K (Mw = 261 000 g/mol, Mn = 77 000 g/mol bestimmt mittels GPC, RI-Detektor, PS als Standard) der BASF SE mit einer Viskositätszahl von 98 ml/g, 0,1 Gew.-Teile Talkum als Keimbildner zur Regelung der Zellgröße und die in der Tabelle angegebenen Gew.-Teile an Flammschutzmitteln und Synergisten werden einem Extruder mit einem inneren Schneckendurchmesser von 120 mm kontinuierlich zugeführt. Durch eine in den Extruder angebrachte Einlassöffnung wird gleichzeitig ein Treibmittelgemisch aus 3,25 Gew.-Teilen Ethanol und 3,5 Gew.-Teilen CO₂ kontinuierlich eingedrückt. Das in dem Extruder bei 200 °C gleichmäßig geknetete Gel wird durch eine Beruhigungszone geführt und nach einer Verweilzeit von 15 Minuten mit einer Austrittstemperatur von 105 °C durch eine 300 mm breite und 1,5 mm weite Düse in die Atmosphäre extrudiert. Der Schaum wird durch einen mit dem Extruder verbundenen Formkanal geführt, wobei eine geschäumte Plattenbahn mit einem Querschnitt 650 mm x 50 mm und einer Dichte von 40 g/l entsteht.

Das Molekulargewicht des Polystyrols betrug 240 000 g/mol (Mw) bzw. 70 000 g/mol (Mn) (bestimmt mittels GPC, RI-Detektor, PS als Standard).

Die Extrusionsergebnisse sind in Tabelle 4 zusammengefasst.

**Tabelle 4: Geruchsentwicklung von erfindungsgemäßer Polymerzusammensetzung beim Heißdrahtschnitt (Beispiele) und von Vergleichsbeispielen**

| Beispiel | Flammschutzsystem (Gew.-Teile bezogen auf Polystyrol) | Geruch bei Extrusion (200 °C) | Geruch der extrudierten Schaumstoffplatten (Lagerzeit: 48 h bei RT) |
|---|---|---|---|
| 1 | FR1 (2,0) + S1 (3,5) | signifikant / schwefelig | signifikant / schwefelig |
| 2 | FR1 (2,0) + S2 (3,5) | geruchsneutral | geruchsneutral |
| 3 | FR1 (2,0) + S3 (3,5) | signifikant / schwefelig | signifikant / schwefelig |

Das Produkt wurde anschließend mechanisch in Platten mit einer Dicke von 1 cm geschnitten. Geprüft wurde das Brandverhalten der Proben nach einer Lagerungszeit von 30 Tagen nach DIN 4102.

Die Brandergebnisse sind in Tabelle 5 zusammengefasst.

**Tabelle 5: Brandverhalten von erfindungsgemäßer Polymerzusammensetzung (Beispiele) und von Vergleichsbeispielen**

| Beispiel | Flammschutzsystem (Gew.-Teile bezogen auf Polystyrol) | Brandtest (B2 nach DIN 4102) / Verlöschzeit (s) |
|---|---|---|
| 1 | FR1 (2,0) + S1 (3,5) | bestanden / 10 s |
| 2 | FR1 (2,0) + S2 (3,5) | bestanden / 9 s |
| 3 | FR1 (2,0) + S3 (3,5) | bestanden / 12 s |

## Patentansprüche

1. Verfahren zur Aufreinigung von Polyphenoldisulfiden der Formel (I), 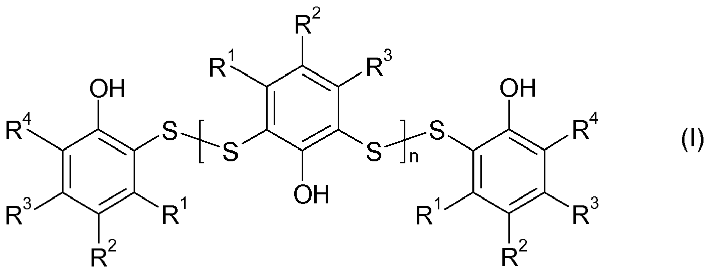 wobei die Symbole R¹, R², R³, R⁴ und n folgende Bedeutungen haben:
R¹, R², R³ sind gleich oder verschieden C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl, eine Heteroarylgruppe, die ein oder mehrere Heteroatome aus der Gruppe N, O und S enthält, O-(C₁-C₁₈)-Alkyl, O-(C₂-C₁₈)-Alkenyl, O-(C₂-C₁₈)-Alkinyl, O-(C₆-C₁₂)-Aryl, O-(C₃-C₁₀)-Cycloalkyl, (C₆-C₁₂)-Aryl-(C₁-C₁₈)-Alkyl-O, S-(C₁-C₁₈)-Alkyl, S-(C₂-C₁₈)-Alkenyl, S-(C₂-C₁₈)-Alkinyl, S-(C₆-C₁₂)-Aryl, S-(C₃-C₁₀)-Cycloalkyl, (C₆-C₁₂)-Aryl-(C₁-C₁₈)-Alkyl-S, OH, F, Cl, Br oder H;
R⁴ ist gleich oder verschieden SH, C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl, eine Heteroarylgruppe, die ein oder mehrere Heteroatome aus der Gruppe N, O und S enthält, O-(C₁-C₁₈)-Alkyl, O-(C₂-C₁₈)-Alkenyl, O-(C₂-C₁₈)-Alkinyl, O-(C₆-C₁₂)-Aryl, O-(C₃-C₁₀)-Cycloalkyl, (C₆-C₁₂)-Aryl-(C₁-C₁₈)-Alkyl-O, S-(C₁-C₁₈)-Alkyl, S-(C₂-C₁₈)-Alkenyl, S-(C₂-C₁₈)-Alkinyl, S-(C₆-C₁₂)-Aryl, S-(C₃-C₁₀)-Cycloalkyl, (C₆-C₁₂)-Aryl-(C₁-C₁₈)-Alkyl-S, OH, F, Cl, Br oder H;
n ist eine ganze Zahl von 0 bis 1000;
umfassend den folgenden Schritt:
a₁) Destillation einer Mischung, enthaltend Polyphenoldisulfide der Formel (I) und
Leichtsieder, unter Bildung eines Destillationsrückstands a₁ und eines Destillats a₁, **dadurch gekennzeichnet, dass** ein Kurzwegverdampfer verwendet wird und dass die Polyphenoldisulfide der Formel (I) im Destillationsrückstand a₁ und die Leichtsieder im Destillat a₁ angereichert werden.

2. Verfahren gemäß Anspruch 1, **dadurch gekennzeichnet, dass** es kontinuierlich durchgeführt wird.

3. Verfahren gemäß Anspruch 1 oder 2, **dadurch gekennzeichnet, dass** die spezifische Zulaufmenge der gemäß Schritt a₁ zu destillierenden Mischung, bezogen auf 1 Stunde und auf 1 Quadratmeter der Verdampferoberfläche des Kurzwegverdampfers, im Bereich von 5 bis 100 kg/h/m² liegt.

4. Verfahren gemäß einem der Ansprüche 1 bis 3, **dadurch gekennzeichnet, dass** die mittlere Verweilzeit des Destillationsrückstands a₁ auf der Verdampferoberfläche des Kurzwegverdampfers im Bereich von 1 Sekunde bis 10 Minuten liegt.

5. Verfahren gemäß einem der Ansprüche 1 bis 4, **dadurch gekennzeichnet, dass** ein Kurzwegverdampfer verwendet wird, bei dem das Verhältnis der Verdampferoberfläche zur Kondensatoroberfläche im Bereich von 10:1 bis 1:10 liegt.

6. Verfahren gemäß einem der Ansprüche 1 bis 5, **dadurch gekennzeichnet, dass** die Verdampfung bei einer Temperatur im Bereich von 150 bis 250 °C durchgeführt wird.

7. Verfahren gemäß einem der Ansprüche 1 bis 6, **dadurch gekennzeichnet, dass** die Kondensation bei einer Temperatur im Bereich von 10 bis 150 °C erfolgt.

8. Verfahren gemäß einem der Ansprüche 1 bis 7, **dadurch gekennzeichnet, dass** die Destillation bei einem Druck im Bereich von 0,0001 bis 0,1 mbar durchgeführt wird.

9. Verfahren gemäß einem der Ansprüche 1 bis 8, **dadurch gekennzeichnet, dass** der Anteil der Polyphenoldisulfide der Formel (I) an der gemäß Schritt a₁ zu destillierenden Mischung im Bereich von 70 bis 99,9 Gew.-% liegt.

10. Verfahren gemäß einem der Ansprüche 1 bis 9, **dadurch gekennzeichnet, dass** der Anteil der Leichtsieder an der gemäß Schritt a₁ zu destillierenden Mischung im Bereich von 0,1 bis 30 Gew.-% liegt.

11. Verfahren gemäß einem der Ansprüche 1 bis 10, **dadurch gekennzeichnet, dass** die
Leichtsieder eine oder mehrere Verbindungen aus der Gruppe Phenole der Formel (IIc), 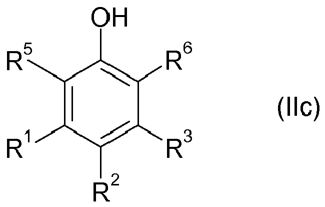 wobei die Symbole R¹, R², R³ die gleichen Bedeutungen wie in den Polyphenoldisulfiden der Formel (I) haben; R⁵ SH oder H ist; und R⁶ SH oder H ist;
und elementarer Schwefel umfassen.

12. Verfahren gemäß einem der Ansprüche 1 bis 11, **dadurch gekennzeichnet, dass** die Polyphenoldisulfide der Formel (I) Poly-(tert.-butylphenoldisulfid) oder Poly-(tert.-pentylphenoldisulfid) sind.

13. Verfahren gemäß einem der Ansprüche 1 bis 12, umfassend die folgenden zusätzlichen Schritte:
aₓ) Destillation des in Schritt aₓ₋₁ gebildeten Destillationsrückstands aₓ₋₁ unter Bildung
eines Destillationsrückstands aₓ und eines Destillats aₓ, **dadurch gekennzeichnet, dass** ein Kurzwegverdampfer verwendet wird und dass die Polyphenoldisulfide der Formel (I) im Destillationsrückstand aₓ und die Leichtsieder im Destillat aₓ angereichert werden, wobei x 2, 3, 4 oder 5 ist.

14. Polyphenoldisulfide der Formel (I), erhältlich durch das Verfahren gemäß einem der Ansprüche 1 bis 13.

15. Flammschutzsystem, enthaltend
i) Polyphenoldisulfide der Formel (I) gemäß Anspruch 14; und
ii) mindestens eine halogenfreie organische Phosphorverbindung mit einem Phosphorgehalt im Bereich von 0,5 bis 40 Gew.-%, bezogen auf die Phosphorverbindung.

16. Polymerzusammensetzung, enthaltend ein oder mehrere Polymere und das Flammschutzsystem gemäß Anspruch 15.
